(19) Europäisches Patentamt
European Patent Office
Office européen des brevets

(11) EP 0 729 816 B1

(12) EUROPEAN PATENT SPECIFICATION

(45) Date of publication and mention of the grant of the patent:
**12.08.1998 Bulletin 1998/33**

(51) Int. Cl.$^6$: **B29B 7/18**

(21) Application number: **96102353.8**

(22) Date of filing: **16.02.1996**

# (54) Internal rubber mixer

Innenmischer für Kautschuk

Mélangeur interne pour caoutchouc

(84) Designated Contracting States:
**DE GB IT**

(30) Priority: **01.03.1995 JP 42011/95**

(43) Date of publication of application:
**04.09.1996 Bulletin 1996/36**

(73) Proprietors:
- **MITSUBISHI JUKOGYO KABUSHIKI KAISHA Tokyo (JP)**
- **THE YOKOHAMA RUBBER CO., LTD. Tokyo (JP)**

(72) Inventors:
- **Hanada, Shuichi, c/o Nagasaki Shipy & Mach Works Nagasaki-shi, Nagasaki-ken (JP)**
- **Seike, Yajuro, c/o Nagasaki Res & Dev Ctr 5-chome, Nagasaki-shi, Nagasaki-ken (JP)**
- **Shojima, Toshikazu, c/o Nagasaki Res & Dev Ctr 5-chome, Nagasaki-shi, Nagasaki-ken (JP)**
- **Moribe, Takashi, c/o Nagasaki Res & Dev Ctr 5-chome, Nagasaki-shi, Nagasaki-ken (JP)**
- **Takano, Haruhiro, c/o Hiratsuka Factory Hiratsuka-shi, Kanagawa-ken (JP)**
- **Nishimura, Ichiro, c/o Hiratsuka Factory Hiratsuka-shi, Kanagawa-ken (JP)**

(74) Representative:
**Henkel, Feiler, Hänzel
Möhlstrasse 37
81675 München (DE)**

(56) References cited:
**EP-A- 0 264 224**
**EP-A- 0 346 680**
**GB-A- 2 028 153**
**EP-A- 0 340 888**
**EP-A- 0 552 514**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Xerox (UK) Business Services
2.16.3/3.4

## Description

### BACKGROUND OF THE INVENTION:

#### Field of the Invention:

The present invention relates to an internal rubber mixer.

#### Description of the Prior Art:

An internal rubber mixer in the prior art, like the one disclosed in GB-A-2028153 and in accordance with the preamble of claim 1, is described with reference to Figs. 13 to 16. In Figs. 13 and 14, numeral 101 designates a container upper part, numeral 102 designates a container lower part, numeral 104 designates a mixing chamber formed between the container upper part 101 and the container lower part 102, numerals 105, 106 designate wall faces of the mixing chamber 104, numeral 107 designates cooling passages provided at the container upper part 101 and the container lower part 102, numeral 108 designates a piston to force a mixing material into the mixing chamber 104 and numeral 109 designates a piston rod.

Numeral 110 designates a hinged supply portion cover, numeral 111 designates a supply port of a compounding agent (a vulcanizing agent for example), numerals 112, 113 designate rotating shafts disposed in parallel each other within the mixing chamber 104, numerals 114, 115 designate axes of the rotating shafts 112, 113, numeral 116 designates a shaft of a mixing chamber lower part, numeral 118 designates a hinged saddle portion supported by the shaft 116 swingably in the directions of arrows 117, numeral 119 designates a locking device of the hinged saddle portion 118, numeral 120 designates an opening portion of the mixing chamber 104 to be opened or closed by the hinged saddle portion 118 and numerals 121, 122 designate rotating directions of the rotating shafts 112, 113.

In Fig. 15, numerals 123, 124 designate bearings of the rotating shafts 112, 113, numerals 125, 126 designate end face walls of the mixing chamber 104 supporting the bearings 123, 124 and numerals 127, 127' designate mixing and kneading wing units connected to the rotating shafts 112, 113. These wing units 127, 127' have cylindrical wing unit base portions 128, 128' provided along the axial direction of the mixing chamber 104 and fitted with transferring and mixing wings 129, 130 and 129', 130', respectively. These wings 129, 130 and 129', 130' are disposed to face to the directions as shown in Fig. 14 and side faces 131, 132 and 131', 132' of wings to bump a mixing material are formed convexly and back side faces thereof 133, 134 and 133', 134' are formed slightly convexly.

The wings 129, 130 are disposed on the cylindrical wing unit 128, the wings 129', 130' are disposed on the cylindrical wing unit 128', the wings 129, 129' form a pair, the wings 130, 130' form a pair, and when the wing units 127, 127' rotate, tip portions 135, 135' of the wings 129, 129' and tip portions 136, 136' of the wings 130, 130', respectively, approach and pass by each other.

Fig. 16 is a development of the wing unit base portion 128. As shown there, the wings 129, 130 incline with a helix angle $\theta_L$ to the axis of the wing unit base portion 128, and between the upstream end portions in the direction of arrow 121 (in the direction of rotation) of the wings 129, 130 and both end face walls of the wing unit base portion 128, end portion passages 137, 138 of an axial directional length $\delta$ are formed, and at the upstream end portions in the direction of rotation of the wings 129, 130, parting portions 137a, 138a are formed to divide a flow of a mixing material.

Behind the arrow direction 121 (the rotational direction) of the end portion passages 137, 138, cut-off wings 139, 140 extending from the end face walls of the wing unit base portion 128 are provided. The axial directional length each of the cut-off wings 139, 140 is equal to, or slightly larger than, $\delta$ so that no stagnation of a mixing material is caused within the range of the end portion passages 137, 138. The cross sectional shape and the helix angle $\theta_s$ of these cut-off wings 139, 140 are same as those of the wings 129, 130. Incidentally, the wings of the wing unit base portion 128' also are constructed in the same way.

If an axial directional length of said cylindrical wing unit base portion 128 (128') is L, a diameter of said mixing chamber 104 is D, a circumferential directional length of said transferring and mixing wings 129, 130 (129', 130') is $L_L$, an axial directional length of said end portion passage 137 (138) is $\delta$, a helix angle of said transferring and mixing wings 129, 130 (129', 130') is $\theta_L$, a helix angle of said cut-off wing 139 (140) is $\theta_s$ and a space between a tip portion of each wing and the inner wall of the mixing chamber 104 is S, then there are following relations in these measures:

$$L/D = 1.25 \pm 0.10$$

$$L_L/L = 0.50 \text{ to } 0.70$$

$$\delta/L = 0.15 \text{ to } 0.35$$

$$\theta_L = \theta_s = 55° \pm 5°$$

$$S/D = 0.0275 \pm 0.0075$$

In said internal rubber mixer, the piston 108 is moved upwardly, the hinged supply portion cover 110 is turned to a chain line position, rubber is supplied into a supply portion, a compounding agent (a vulcanizing agent for example) is supplied into the supply portion from the supply port 111, then the piston 108 is moved downwardly and these mixing materials are forced with pressure into the mixing chamber 104, while the wing units 127, 127' are rotated in the arrow directions 121, 122.

The mixing material is divided into the arrow directions 141, 142 by the parting portion 137a of the wing 129 so as to make a flow movement along the wing side face 131 and a flow movement on the end portion passage 137, as well as is divided into the arrow directions 143, 144 by the parting portion 138a of the wing 130 so as to make a flow movement along the wing side face 132 and a flow movement on the end portion passage 138. This action is made likewise at the wing unit 127'.

That is, the mixing material is divided twice at every one rotation of the wing units 127, 127' and the divided mixing material is moved from the end portion to the central portion and then to the end portion again. As a result, a strong mixing and lapping is carried out and boundary layers are replaced with new ones, thereby a peak value of the temperature of the inner portion of the mixing material is lowered.

The above-mentioned internal rubber mixer is used mainly for a process to knead rubber and compounding agent, wherein a shearing action to rubber is lessened so as not to raise a temperature of rubber to the extent possible and in order to activate movements of rubber in the axial direction of the wing unit base portions 128, 128' and 139, 140, the helix angles $\theta_L$, $\theta_s$ are set in a range of 55° to 60°.

A performance required for this kind of internal rubber mixer is an enhancement of ① a productivity, ② a macro-dispersibility of compounding agent (a macro-dispersibility = relating to a flowability and an agitatability of an entire mixing chamber, a dispersibility is at a level to be able to confirm a state of dispersion of rubber and compounding agent by the eye or by a magnifying glass of a low magnification) and ③ a micro-dispersibility of compounding agent (a micro-dispersibility = a flocculated lump of compound agent being crushed into micro-particles and dispersed uniformly, a dispersibility is at a level to be able to confirm by an electron microscope).

In order to enhance a productivity and a macro-dispersibility of compounding agent, it is necessary to strengthen a rubber shearing action between rotor wings (the wing units 127, 127') and a mixing chamber (the mixing chamber 104) and in order to enhance a macro-dispersibility of compounding agent and a cooling ability, it is necessary to better an agitatability of rubber within a mixing chamber (the mixing chamber 104).

In an internal rubber mixer in the prior art as shown in Figs. 13 to 16, (1) as a principal object is to enhance a shearing action to rubber and a temperature rise of rubber is extreme so that there is a fear of burning, hence the rubber is once discharged and cooled and yet a kneading process is required once again and (2) if an enhancement of an agitatability of rubber is put emphasis on, an enough micro-dispersibility of compounding agent may not be obtained. That is, in said internal rubber mixer in the prior art, it is necessary to further strengthen a rubber shearing action between a rotor and a mixing chamber so as to enhance a cooling ability and a micro-dispersibility of compounding agent.

SUMMARY OF THE INVENTION:

In view of the above-mentioned problems in the prior art, the present invention is disclosed with an object to provide an internal rubber mixer by which ① an enhancement of a productivity and an enhancement of a micro-dispersibility of compounding agent can be attained and ② an enhancement of a macro-dispersibility of compounding agent and a low temperature mixing of rubber can be attained.

The present invention to attain the above-mentioned objects is defined in claim 1.

In a preferred embodiment of the present invention, a helix angle of each said short wing to the axis of the rotor is made same as that of said long wing, an axial directional length of each said short wing is made smaller than 1/2 of the axial directional length of the rotor and larger than the axial directional length of each said cut-off portion of the long wing.

In another preferred embodiment of the present invention, each said short wing is disposed on the rotor extendingly from said end face of the rotor.

In a further preferred embodiment of the present invention, said two four-wing rotors, each rotor having two long wings and two short wings, are constructed with long wing opposite directional type rotors in which long wings of each said rotor are disposed symmetrically between said two rotors.

As a shearing action to rubber of a rotor wing has a relation to a wing perpendicular component $P_z$ of P in Fig. 4, the larger is the valve of $P_z$, the larger is the shearing action. And as an agitating action to rubber has a relation to a wing parallel component $P_x$ of P in Fig. 4, the larger is the value of $P_x$, the larger is the agitating action. In order to maintain a shearing action and an agitating action to rubber at a high level, it is appropriate to select a helix angle of the long wing 2 in a range of not less than 30° and less than 50° and in an internal rubber mixer according to the present invention, a helix angle of the long wing 2 is set in this range. Further, an axial directional length $L_s$ of the short wing 3 is made larger than an axial directional length $\delta$ of the cut-off portion of the long wing 2 and the short wing 3 is disposed on the rotor extendingly from an end face of the rotor, thereby a rubber flow f-1 is prevented from passing straight through a rotor space portion (Fig. 1, Fig. 9). In this way, an internal rubber mixer according to the present invention, ① being excellent in a shearing action to rubber, can attain an enhancement of a productivity as well as of a micro-dispersibility of compounding agent and, ② being excellent in an agitating action of rubber, can attain an enhancement of a macro-dispersibility of compounding agent as well as a low temperature mixing of rubber.

## BRIEF DESCRIPTION OF THE DRAWINGS:

In the accompanying drawings:

Fig. 1 is a development of a rotor (a long wing opposite directional type rotor) of an internal rubber mixer which is a preferred embodiment according to the present invention.

Fig. 2 is a transverse sectional view of an internal rubber mixer of Fig. 1.

Fig. 3 is a development of a long wing parallel directional type rotor used for comparison tests with a rotor (a long wing opposite directional rotor) according to the present invention.

Fig. 4 is an explanatory drawing on a shearing action to rubber of a rotor wing taken along line A-A in the direction of arrows of Fig. 1.

Fig. 5 is an explanatory graph on agitatabilities of a long wing opposite directional type rotor according to the present invention and a long wing parallel directional type rotor used for comparison tests.

Fig. 6 is an explanatory graph on a difference of an electric power supply velocity between a long wing opposite directional type rotor according to the present invention and a long wing parallel directional type rotor used for comparison tests.

Fig. 7 is an explanatory graph on a difference of a temperature rise velocity between a long wing opposite directional type rotor according to the present invention and a long wing parallel directional type rotor used for comparison tests.

Fig. 8 is an explanatory graph on a relation between a wing helix angle and a mixing completion time.

Fig. 9 is an explanatory drawing showing an influence of a length of a short wing ($L_s > 1/2 \cdot L$ and $L_s < 1/2 \cdot L$) given to rubber flows.

Fig. 10 is an explanatory drawing showing an influence of a length of a short wing ($L_s > \delta$ and $L_s < \delta$) given to rubber flows.

Fig. 11 is an explanatory drawing showing rubber flows of a long wing parallel directional type rotor used for comparison tests.

Fig. 12 is an explanatory drawing showing rubber flows of a long wing opposite directional type rotor according to the present invention.

Fig. 13 is a transverse sectional view showing an internal rubber mixer in the prior art.

Fig. 14 is an enlarged transverse sectional view showing a part of said internal rubber mixer in the prior art.

Fig. 15 is a horizontal sectional view taken along line X-X in the direction of arrows of Fig. 14.

Fig. 16 is a development of a cylindrical wing unit base portion of said internal rubber mixer in the prior art.

## DESCRIPTION OF THE PREFERRED EMBODIMENTS:

One preferred embodiment of an internal rubber mixer according to the present invention is described with reference to Figs. 1 and 2. Numeral 1 designates one of two four-wing rotors, each said rotor 1 having two long wings 2 and two short wings 3 and being disposed in parallel each other within a mixing chamber 5 so as to be rotated in mutually opposite directions.

Each said long wing 2 is cut off of its both end portions so as not to reach to the end faces of the rotor and there are formed passages of an axial directional length $\delta$ at both end portions of each said long wing 2. Letter $\theta_L$ designates a helix angle to the axis of rotor of the long wing 2, which is set in a range of not less than 30° and less than 50°. Each said short wing 3 is disposed on the downstream side of the rotating direction (see arrow 4) of each said long wing 2 and a helix angle $\theta_s$ to the axis of rotor of the short wing 3 is set at the same angle as the helix angle $\theta_L$ of the long wing 2.

Letter $L_L$ designates an axial directional length of each said long wing 2 and letter $L_s$ designates an axial directional length of each said short wing 3. The short wing 3 extends from the end face of the rotor 1 to the inside direction and its axial directional length $L_s$ is made smaller than 1/2 of the axial directional length L of the rotor 1 and larger than the axial directional length of the cut-off portion of the long wing 2.

While a long wing opposite directional type rotor of four wings is described above as a rotor according to the present invention, a rotor of Fig. 3 is a long wing parallel directional type rotor of four wings used for comparison tests with said long wing opposite directional type rotor. If considered in a steady state, the lesser is a stagnation portion 7 of a rubber flow 6 (Fig. 11, Fig. 12), the more excellent is the agitatability of the rotor 1. If the rubber flow 6 is compared (Fig. 11, Fig. 12), there are considered lesser stagnation portions 7 in the long wing opposite directional type rotor. Thus, the helix angle $\theta_L$ of the long wing 2 is set same both in the long wing opposite directional type rotor and in the long wing parallel directional type rotor and comparison tests are carried out as to agitatability of both rotors.

In agitatability comparison tests, a CMC (carboxymethylcellulose) aqueous solution is filled at a filling rate of 80% in a mixer made of an acrylic resin of a size of 5 litre internal volume, a color agent is added and a degree of mixing is measured. The reason for using the CMC aqueous solution is that it is visible and that a nature of a quasi-plastic flowability, same as rubber, can be obtained thereby.

Fig. 5 shows a relation between an agitating time and a standard deviation value of optical density ratio data at an optimum condition of a long wing parallel directional type rotor and a long wing opposite directional type rotor, respectively. The smaller is the standard deviation value of the optical density ratio data, the better is the dispersibility of the color agent. It is found from Fig. 5 that, at an initial mixing state (agitating time 30 sec., 60 sec.), the long wing opposite directional type rotor is excellent twice in the agitatability as compared with the long wing parallel directional type rotor.

Comparison tests are carried out as to a shearing action to actual rubber and a cooling performance thereof, in which a laboratory mixer of a mixing chamber diameter of 235.5 mm∅ is used and an elementary mixing of a natural rubber is performed. A filling rate being 75% and a discharge temperature being kept constant (180°C), a rubber temperature, an electric power consumption and a Mooney viscosity after elementary mixing are measured.

Fig. 6 shows a relation between an elementary mixing viscosity of rubber and an electric power supply velocity (electric power consumption/mixing time). If an electric power supply velocity is compared between a long wing opposite directional type rotor of Fig. 1 and a long wing parallel directional type rotor of Fig. 3 at a certain elementary mixing viscosity, that of the long wing opposite directional type rotor is faster by 7% than that of the long wing parallel directional type rotor. The higher is the electric power supply velocity, the stronger is the shearing action to rubber, hence it is found that the long wing opposite directional type rotor has an equal or stronger shearing action as compared with the long wing parallel directional type rotor.

While a shearing action is influenced by a length of the long wing 2, in order to make a shearing force larger and yet not to obstacle a flow movement of rubber, it is preferable to set $L_L/L$ at 0.65 to 0.80.

Fig. 7 shows a relation between an elementary mixing viscosity and a temperature rise velocity (risen temperature/mixing time). It is found that a temperature rise velocity of the long wing opposite directional type rotor is lower by about 10% than that of the long wing parallel directional type rotor at a certain elementary mixing viscosity.

In a long wing opposite directional type rotor of Fig. 1, a helix angle $\theta_L$ of the long wing 2 and a helix angle $\theta_s$ of the short wing 3 are changed to 25°, 30°, 40° and 45° and a mixing ability of color agent within the CMC aqueous solution is investigated and a result shown in Fig. 8 is obtained. Fig. 8 shows a relation between a mixing ability and a mixing completion time according to helix angles. A mixing completion time represents a time when a standard deviation value of an optical density ratio becomes 0.1.

If an influence of wing helix angles $\theta_L$ of the long wing 2 given to a shearing action to rubber and an agitating action is considered, a shearing action to rubber of a rotor wing has a relation to a wing perpendicular component $P_z$ of P of Fig. 4 and the larger is the value of $P_z$, the larger is the shearing action. And an agitating action to rubber has a relation to a wing parallel component $P_x$ of P of Fig. 4 and the larger is the value of $P_x$, the larger is the agitating action.

In order to maintain a shearing action and an agitating action to rubber at a high level, it is appropriate to select a helix angle of the long wing 2 in a range of not less than 30° and less than 50°, which is confirmed by a test result shown in Fig. 8.

A helix angle of the short wing 3 is made equal to the helix angle $\theta_L$ of the long wing 2 from the test result shown in Fig. 8.

An axial directional length of the short wing 3 is considered. Fig. 9 is an explanatory drawing showing an influence of a length of the short wing 3 ($L_s > 1/2 \cdot L$ and $L_s < 1/2 \cdot L$) given to rubber flows, Fig. 10 is an explanatory drawing showing an influence of a length of the short wing 3 ($L_s > \delta$ and $L_s < \delta$) given to rubber flows, Fig. 11 is an explanatory drawing showing rubber flows of the long wing parallel directional type rotor and Fig. 12 is an explanatory drawing showing rubber flows of the long wing opposite directional type rotor.

As shown in Fig. 9, if the axial directional length $L_s$ of the short wing 3 is made longer than 1/2 of that L of the rotor 1, such undesirable effects as a decrease of capacity within the mixing capacity 5, an inactivity of a circumferential directional flow of a rubber flow f-1 and an increase of exothermic amount accompanying with excessive shearing actions to rubber are caused, which should be avoided in an internal rubber mixer, hence, in the present invention, the axial directional length $L_s$ of the short wing 3 is made less than 1/2 of that L of the rotor 1 ($L_s < 1/2 \cdot L$).

Further, in the present invention, the axial directional length $L_s$ of the short wing 3 is made longer than that $\delta$ of the cut-off portion of the long wing 2, as shown in Fig. 12. This is because, if $L_s$ is smaller than $\delta$ ($L_s < \delta$), the rubber flow f-1 cannot be formed at the cut-off portion of the long wing 2 and the rubber flow f-1 passes straight through a rotor space portion. Thus, the axial directional length $L_s$ of the short wing 3 is made larger than $\delta$ ($L_s > \delta$).

In a long wing opposite directional type rotor shown in Fig. 1, as compared with a long wing parallel directional type rotor, an electric power supply velocity is increased by 7%, a risen temperature is decreased by 10% and an agitatability (mixing velocity) of the CMC aqueous solution increases twice at an initial stage of agitation (30 sec. to 60 sec.).

A shearing action to rubber of a rotor wing has a relation to a wing perpendicular component $P_z$ of P in Fig. 4 and the larger is the value of $P_z$, the larger is the shearing action. And an agitating action to rubber has a relation to a wing parallel component $P_x$ of P in Fig. 4 and the larger is the value of $P_x$, the larger is the agitating action. In order to maintain a shearing action and an agitating action to rubber at a high level, it is appropriate to select a helix angle of the long wing 2 in a range of not less than 30° and less than 50° and in an internal rubber mixer according to the present invention, a helix angle of the long wing 2 is set in this range. Further, an

axial directional length $L_s$ of the short wing 3 is made larger than that $\delta$ of the cut-off portion of the long wing 2, thereby the rubber flow f-1 is prevented from passing straight through a rotor space portion. In this way, an internal rubber mixer according to the present invention, ① being excellent in a shearing action to rubber, can attain an enhancement of a productivity as well as of a micro-dispersibility of compounding agent and, ② being excellent in an agitating action of rubber, can attain an enhancement of a macro-dispersibility of compounding agent as well as a low temperature mixing of rubber.

## Claims

1. An internal rubber mixer comprising two four-wing rotors (1) disposed in parallel to each other within a mixing chamber (5) and being rotatable in mutually opposite directions to thereby mix rubber, wherein each rotor has a cylindrical base portion and provided thereon two pairs of wings consisting of a long wing (2) and a corresponding short wing (3), wherein each said long wing (2) does not extend completely in either direction to the end of the rotor (1), characterized in that a helix angle ($\theta_L$) of the long wings (2) to the axis of the rotor (1) is set in a range of not less than 30° and less than 50° and each said short wing (3) is disposed on the rotor (1) on the downstream side of each corresponding long wing, with respect to the flow direction of the rubber relative to each said pair of wings.

2. An internal rubber mixer as claimed in claim 1, characterized in that a helix angle ($\theta_s$) of each said short wing (3) to the axis of the rotor (1) corresponds to the helix angle ($\theta_L$) of each said long wing (2) and an axial directional length of each said short wing (3) is made smaller than 1/2 of the axial directional length of the rotor (1) and larger than the axial directional length between the end of each long wing (2) and the end of the rotor (1).

3. An internal rubber mixer as claimed in claim 1 or 2, characterized in that each said short wing (3) is disposed on the rotor (1) so as to extend from an end face of the rotor (1) to the inside direction.

4. An internal rubber mixer as claimed in any one of claims 1 to 3, characterized in that the long wings (2) of the two pairs of wings of each rotor (1) are disposed in opposite directions, whereby the long wings (2) of each rotor (1) are disposed symmetrically between said two rotors (1).

## Patentansprüche

1. Innenmischer für Kautschuk mit vier in einer Mischkammer (5) parallel zueinander angeordneten und in zueinander entgegengesetzten Richtungen drehbaren, vierflügeligen Rotoren (1) zum Mischen von Kautschuk, wobei jeder Rotor einen zylindrischen Basisabschnitt aufweist und mit zwei Flügelpaaren, bestehend aus einem langen Flügel (2) und einem entsprechenden kurzen Flügel (3), an diesem versehen ist, wobei sich jeder lange Flügel (2) in jeder Richtung nicht vollständig bis zum Ende des Rotors (1) erstreckt,

   dadurch gekennzeichnet, daß ein Steigungswinkel ($\theta_L$) der langen Flügel (2) zur Achse des Rotors (1) in einem Bereich von nicht weniger als 30° und weniger als 50° festgelegt ist, und jeder kurze Flügel (3) am Rotor (1) stromabseitig jedes entsprechenden langen Flügels in Bezug auf die Fließrichtung des Kautschuks relativ zu jedem Flügelpaar angeordnet ist.

2. Innenmischer für Kautschuk nach Anspruch 1, dadurch gekennzeichnet, daß ein Steigungswinkel ($\theta_S$) jedes kurzen Flügels (3) zur Rotorachse (1) dem Steigungswinkel ($\theta_L$) jedes langen Flügels (2) entspricht, und eine Axialrichtungslänge jedes kurzen Flügels (3) kleiner als 1/2 der Axialrichtungslänge des Rotors (1) und größer als die Axialrichtungslänge zwischen dem Ende jedes langen Flügels (2) und dem Ende des Rotors (1) gewählt ist.

3. Innenmischer für Kautschuk nach Anspruch 1 oder 2, dadurch gekennzeichnet, daß jeder kurze Flügel (3) so am Rotor (1) angeordnet ist, daß er sich von einer Endfläche des Rotors (1) in Richtung der Innenseite erstreckt.

4. Innenmischer für Kautschuk nach einem der vorangehenden Ansprüche, dadurch gekennzeichnet, daß die langen Flügel (2) der zwei Flügelpaare jedes Rotors (1) in zueinander entgegengesetzten Richtungen angeordnet sind, so daß die langen Flügel (2) jedes Rotors (1) symmetrisch zwischen den beiden Rotoren (1) angeordnet sind.

## Revendications

1. Mélangeur interne pour caoutchouc comprenant deux rotors à quatre ailettes (1) disposés en parallèle à l'intérieur d'une chambre de mélange (5) et pouvant tourner dans des directions mutuellement opposées pour ainsi mélanger le caoutchouc, dans lequel chaque rotor possède une partie de base cylindrique et sur celui-ci deux paires d'ailettes se composant d'une ailette longue (2) et d'une ailette courte (3) correspondante, dans lequel chaque dite ailette longue (2) ne s'étend pas complètement dans l'une ou l'autre direction, vers l'extrémité du rotor (1), caractérisé en ce qu'un angle d'hélice ($\theta_L$) des ailettes longues (2) par rapport à l'axe du rotor (1) est compris dans une plage n'excédant pas 30° et qui n'est pas inférieure à 50° et chaque dite ailette courte (3) est disposée sur le rotor (1) sur le côté aval de chaque, ailette longue correspondante, par rapport à la direction d'écoulement du caoutchouc par rapport à ladite paire d'ailettes.

2. Mélangeur interne pour caoutchouc selon la revendication 1, caractérisé en ce que l'angle d'hélice ($\theta_S$) de chaque dite ailette courte (3) par rapport à l'axe du rotor (1) correspond à l'angle d'hélice ($\theta_L$) de chaque dite ailette longue (2) et une longueur directionnelle axiale de chaque dite ailette courte (3) est réduite à moins de la moitié de la longueur directionnelle axiale du rotor (1) et agrandie à plus de la longueur directionnelle axiale entre l'extrémité de chaque ailette longue (2) et l'extrémité du rotor (1).

3. Mélangeur interne pour caoutchouc selon la revendication 1 ou 2, caractérisé en ce que chaque dite ailette courte (3) est disposée sur le rotor (1) afin de s'étendre d'une face d'extrémité du rotor (1) vers la direction intérieure.

4. Mélangeur interne pour caoutchouc selon l'une quelconque des revendications 1 à 3, caractérisé en ce que les ailettes longues (2) des deux paires d'ailettes de chaque rotor (1) sont disposées dans des directions opposées, les ailettes longues (2) de chaque rotor (1) sont disposées symétriquement entre lesdits deux rotors (1).

Fig. 1

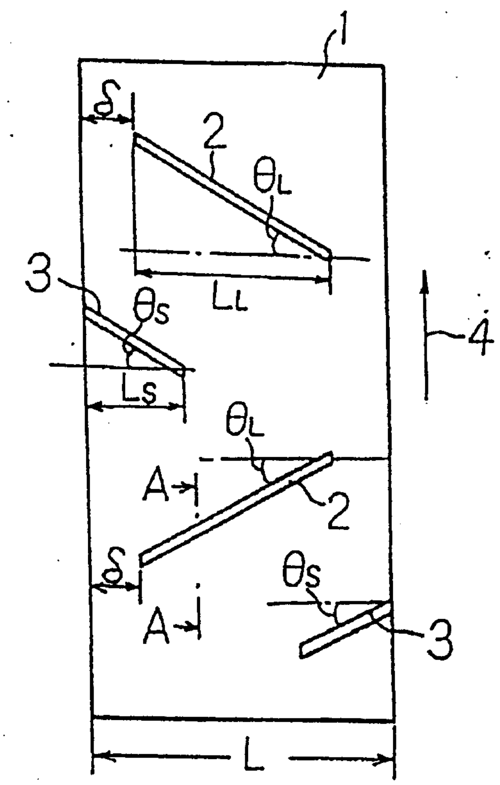

Fig. 2

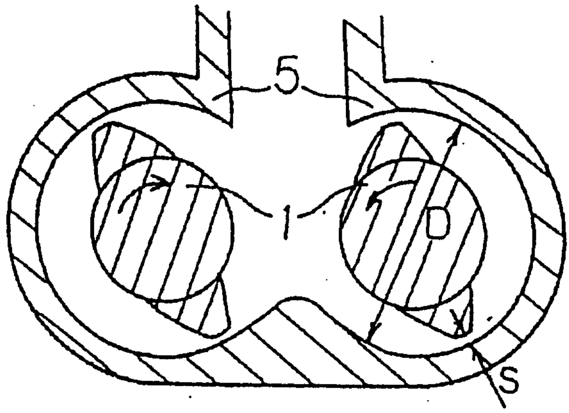


Fig. 3

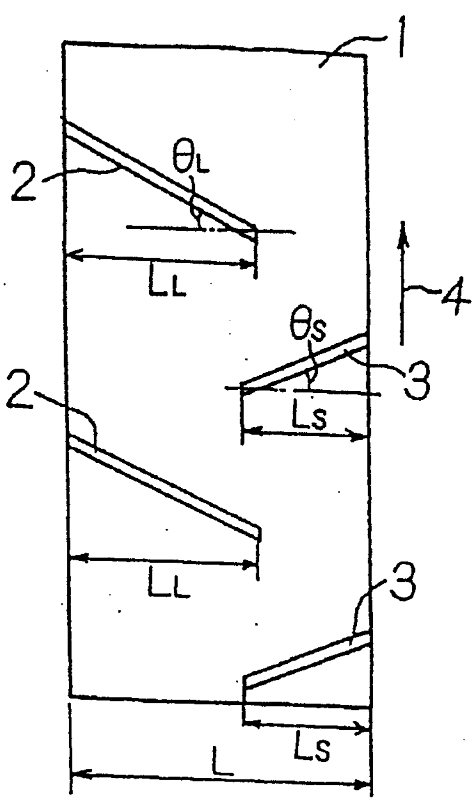

Fig. 4

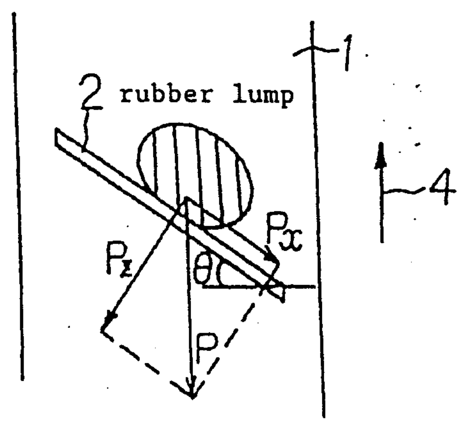

Fig. 5

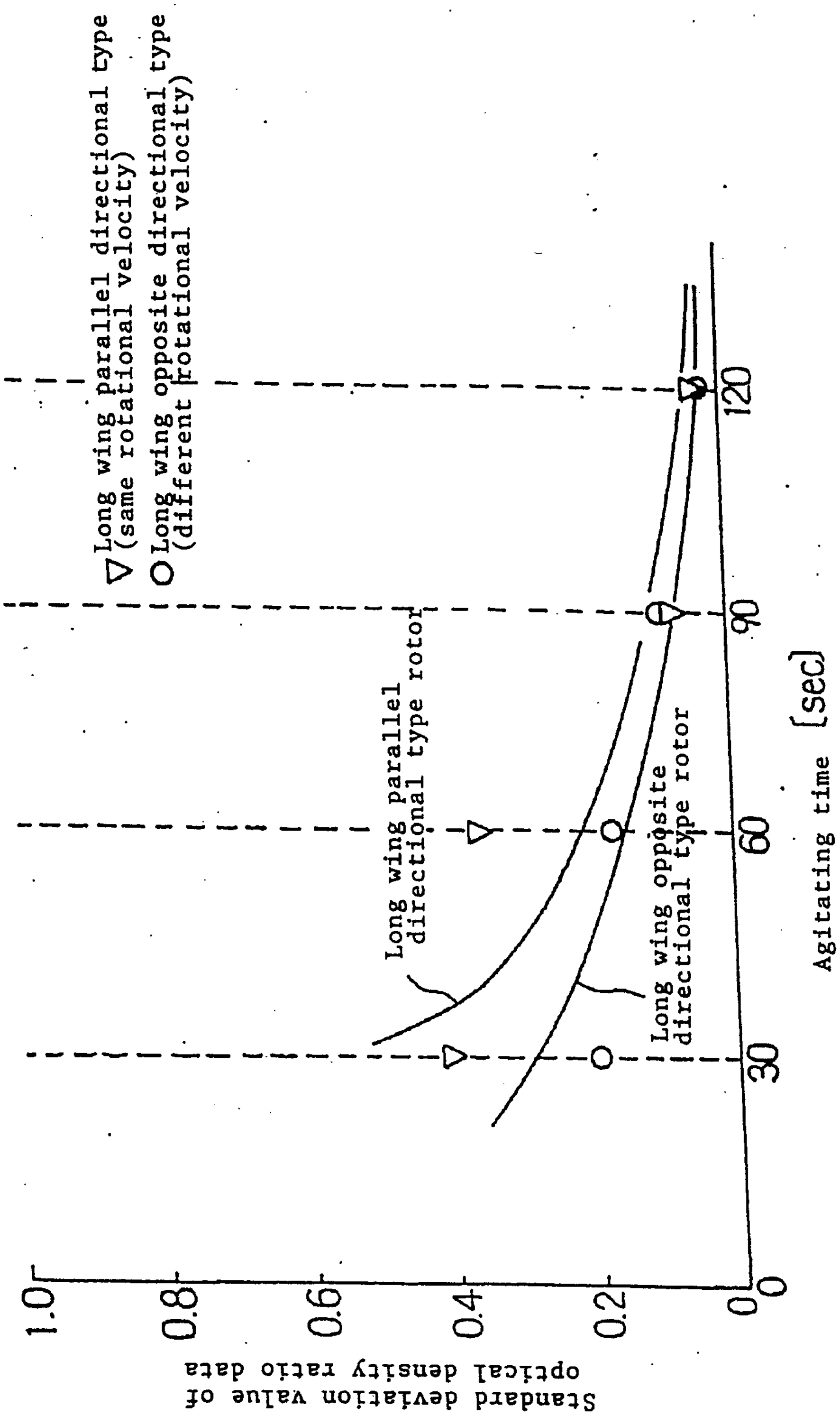
Long wing parallel directional type
(same rotational velocity)
Long wing opposite directional type
(different rotational velocity)
Long wing parallel directional type rotor
Long wing opposite directional type rotor
Standard deviation value of optical density ratio data
1.0
0.8
0.6
0.4
0.2
0
0
30
60
90
120
Agitating time
[sec]

Fig. 6

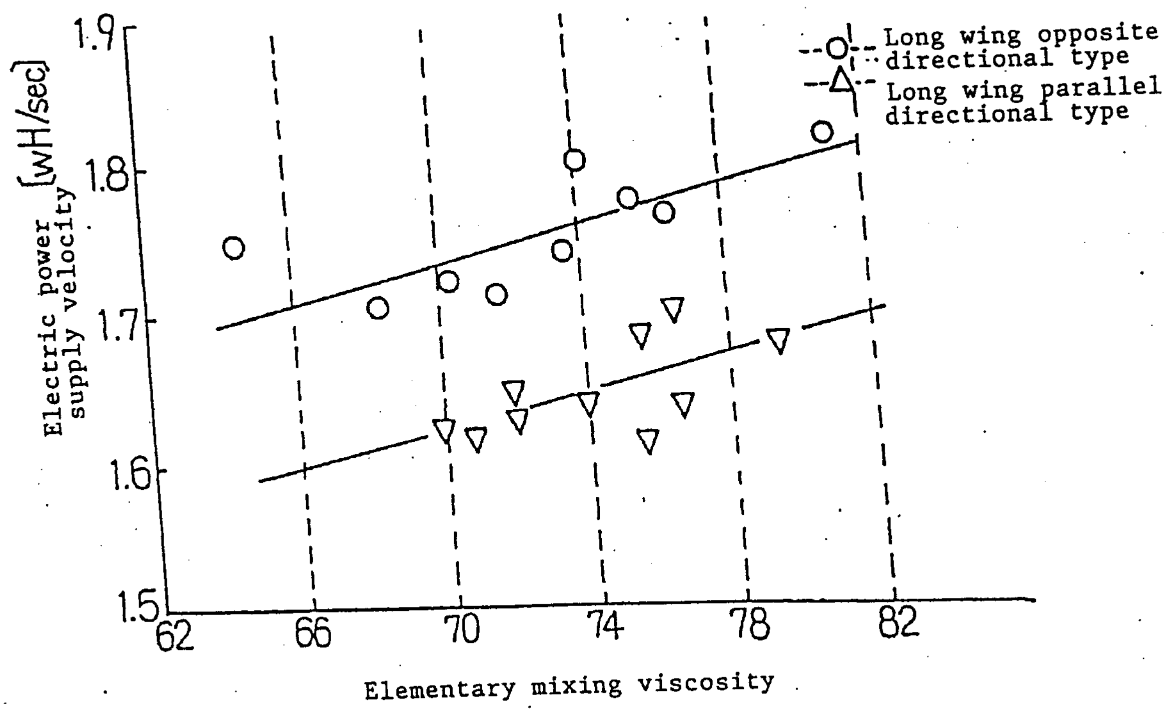
1.9
1.8
1.7
1.6
1.5
Electric power supply velocity [wH/sec]
62
66
70
74
78
82
Elementary mixing viscosity
Long wing opposite directional type
Long wing parallel directional type

Fig. 7

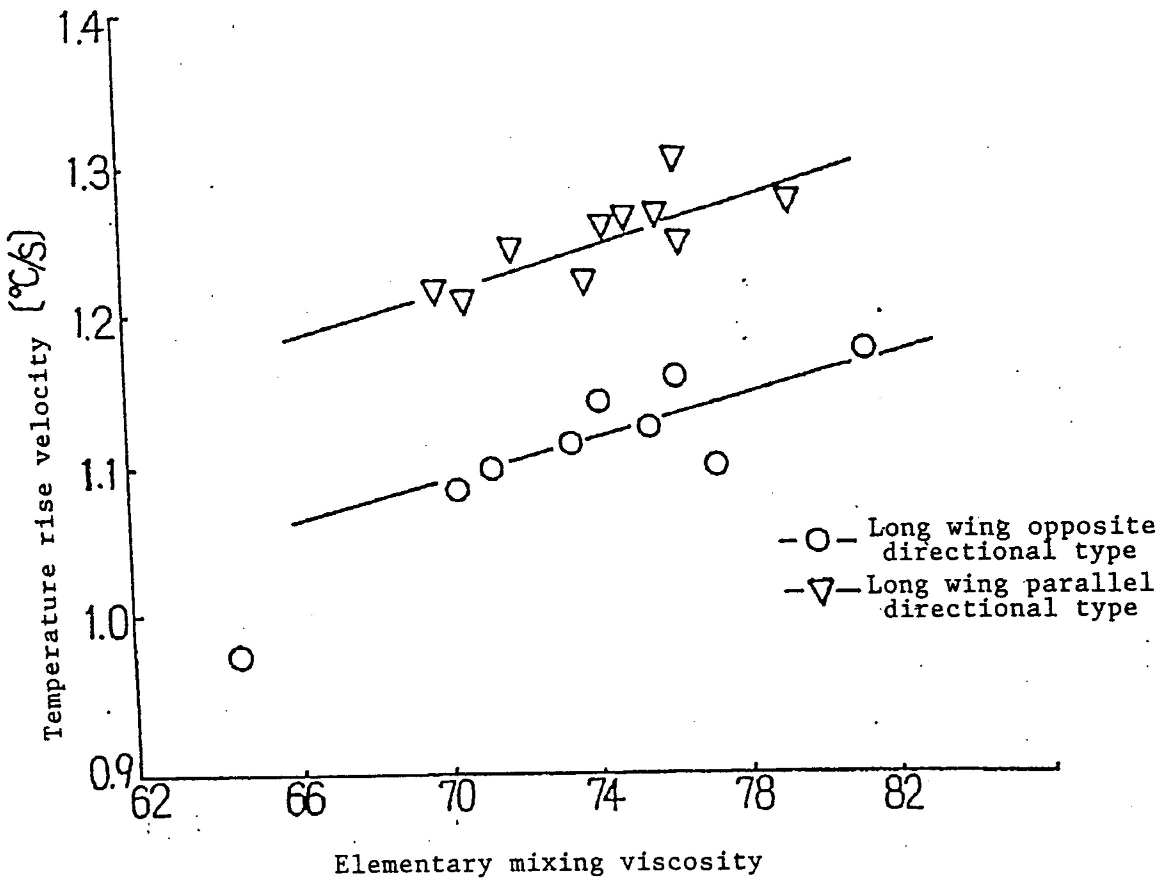
1.4
1.3
1.2
1.1
1.0
0.9
Temperature rise velocity [℃/s]
62
66
70
74
78
82
Elementary mixing viscosity
Long wing opposite directional type
Long wing parallel directional type

Fig. 8

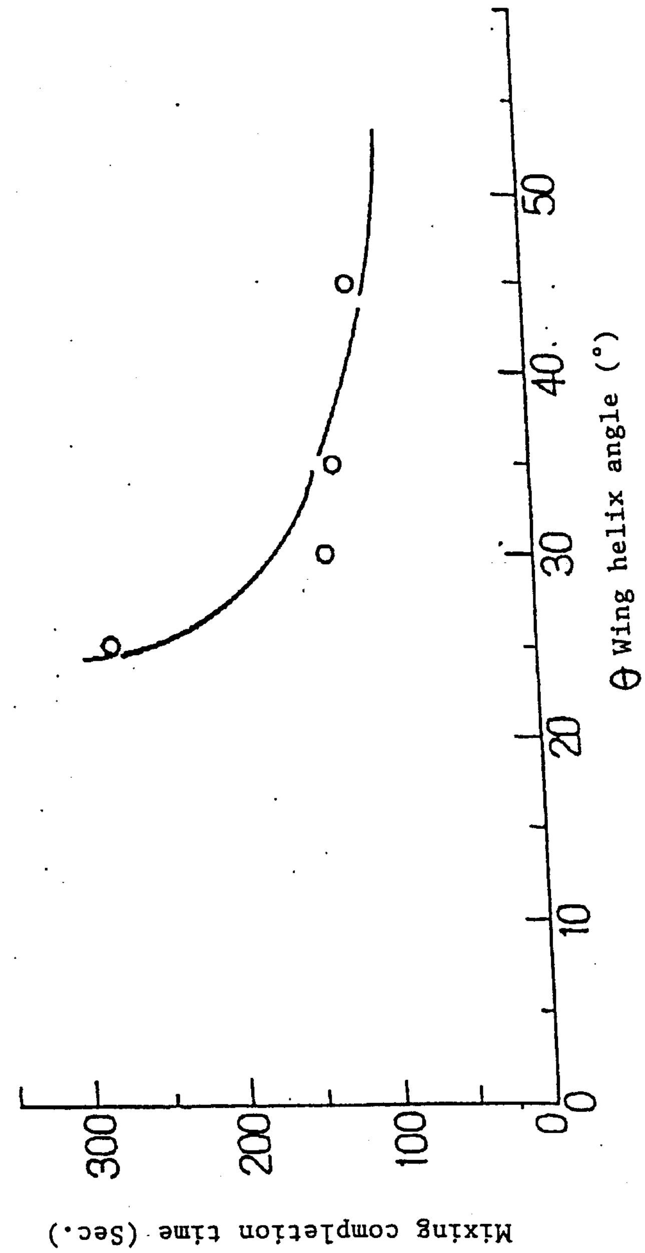
Mixing completion time (Sec.)
300
200
100
0
0
10
20
30
40
50
θ Wing helix angle (°)

Fig. 9

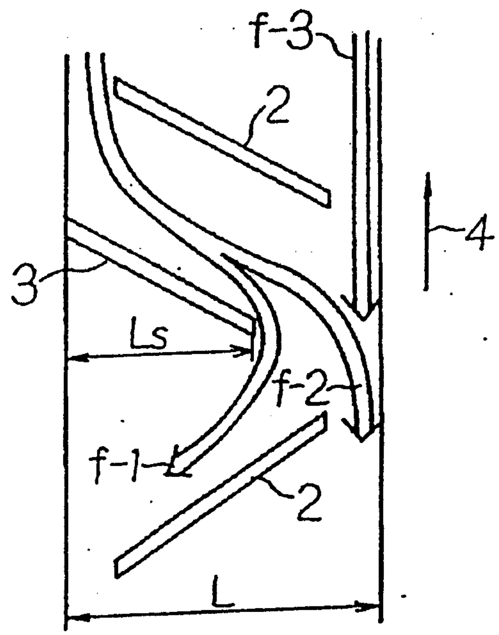


| | f-1 flow | f-2 flow | f-3 and f-2 mixed |
|---|---|---|---|
| $Ls > \frac{1}{2}L$ | Δ | good | good |
| $Ls < \frac{1}{2}L$ | good | good | good |

Fig. 10

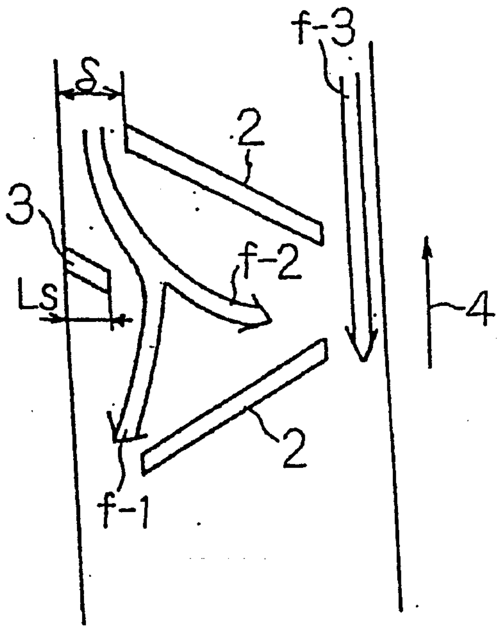


| | f−2 flow | f-3 and f-2 mixed |
|---|---|---|
| Ls>δ | good | good |
| Ls<δ | X | X |

Fig. 11

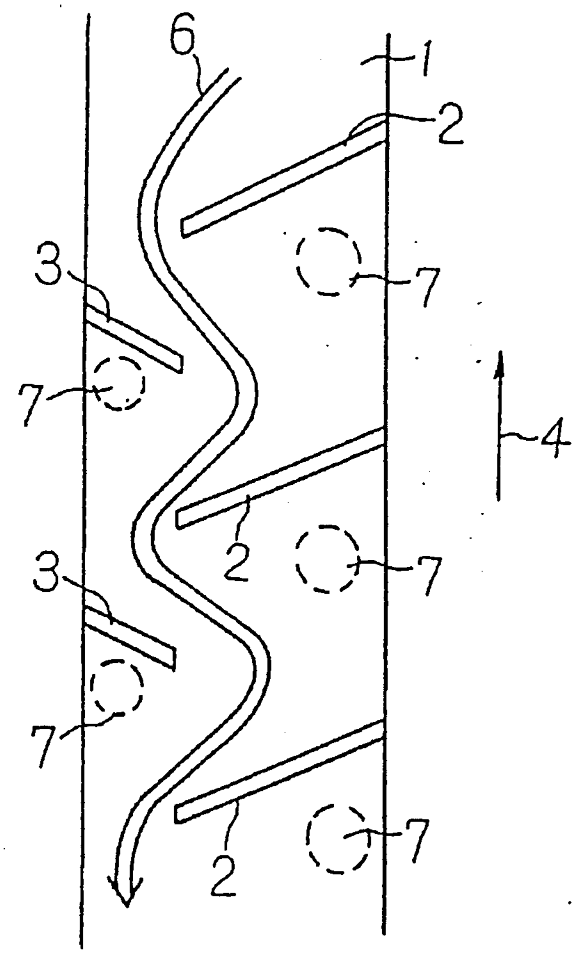

Fig. 12

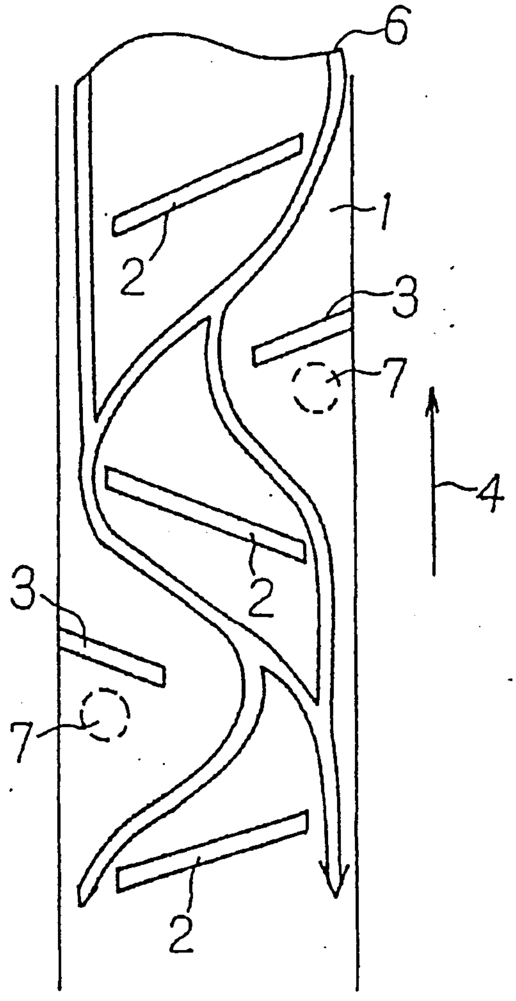

Fig. 13

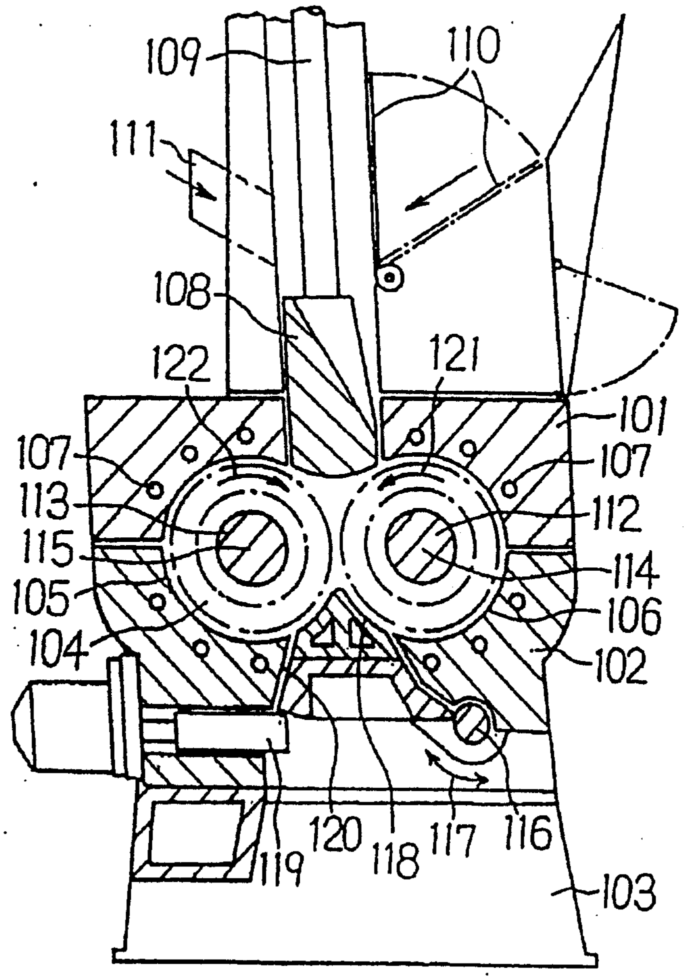
109
110
111
108
122
121
101
107
107
113
112
115
114
105
106
104
102
119
120
118
117
116
103

Fig. 14

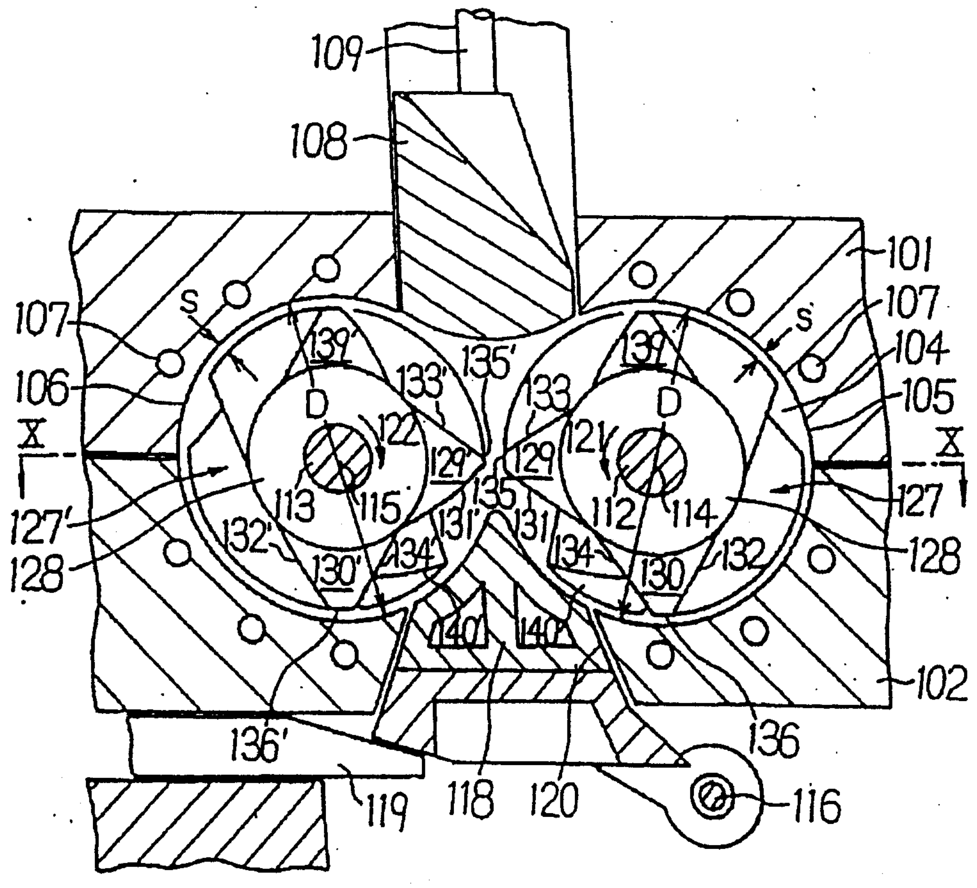
109
108
101
107
107
104
105
106
S
S
139'
139
133'
135'
133
D
D
X
X
122
121
129'
129
127'
127
113
115
135
112
114
128
128
132'
131'
131
134'
134
132
130'
130
140'
140
102
136'
136
119
118
120
116

Fig. 15

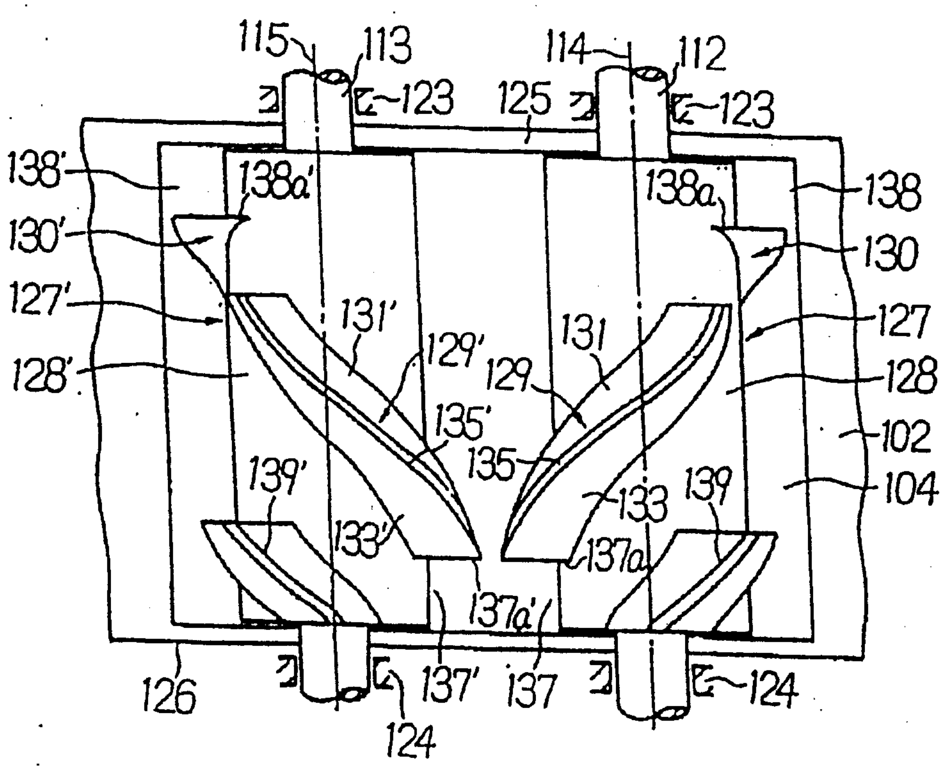
115
113
114
112
123
125
123
138'
138a'
138a
138
130'
130
127'
127
131'
131
129'
129
128'
128
135'
135
102
139'
139
104
133'
133
137a
137a'
126
137'
137
124
124

Fig. 16

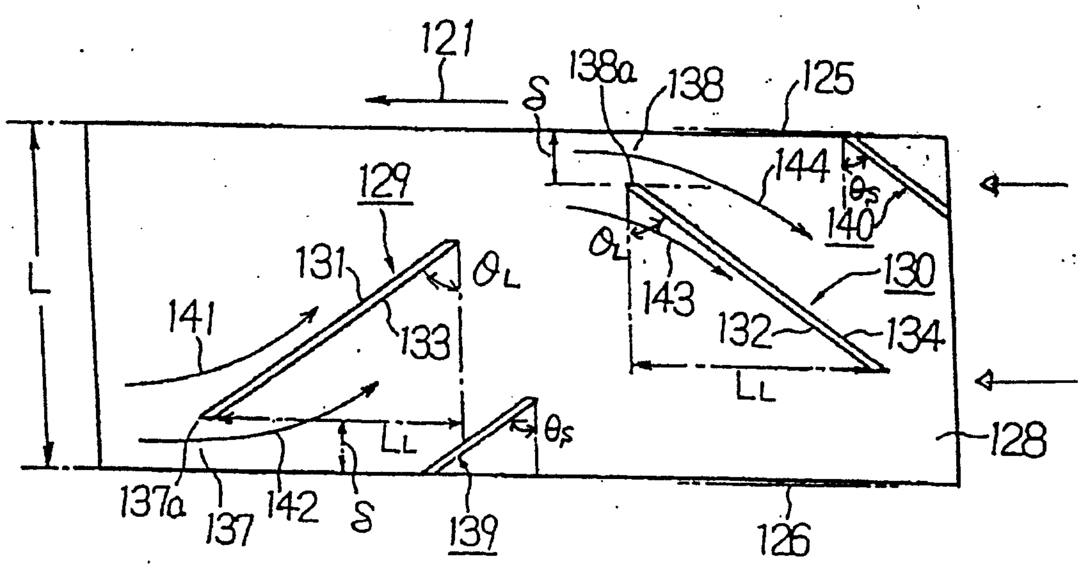
121
S
138a
138
125
144
θs
140
129
131
θL
θL
143
130
141
133
132
134
L
LL
LL
θs
128
137a
137
142
S
139
126